# EUROPÄISCHE PATENTSCHRIFT

(11) **EP 1 759 592 B1**
(45) Veröffentlichungstag und Bekanntmachung des Hinweises auf die Patenterteilung: **20.08.2008**
(21) Anmeldenummer: 06017035.4
(22) Anmeldetag: 01.04.2004
(51) Int. Cl.: A23G 7/02, A23G 1/18, F25D 13/04, F25D 13/06

(54) **Vorrichtung zum Temperieren von Gegenständen**
Device for tempering articles
Dispositif pour tempérer des articles

(30) Priorität: 11.04.2003 DE 10317006
(43) Veröffentlichungstag der Anmeldung: 07.03.2007
(62) Teilanmeldung aus: 04724969.3
(73) Patentinhaber: AWEMA AG,, 8330 Pfäffikon (CH)
(72) Erfinder: Knobel, Josef, 8556 Wigoltingen (CH)
(74) Vertreter: Frommhold, Joachim

(56) Entgegenhaltungen:
- WO-A-99/04643
- DE-A- 2 544 923
- DE-B- 1 083 284
- GB-A- 2 214 281
- US-A- 3 150 504

## Beschreibung

Die Erfindung betrifft eine Vorrichtung und ein Verfahren zum Temperieren von Gegenständen, insbesondere zum Kühlen von Verzehrgütern in der Confiserie, mit einem Hohlkörper mit Öffnungen in seinem Mantel, welcher von einer Führung für die Gegenstände umfangen ist, wobei dem Hohlkörper zumindest ein Ventilator und diesem zumindest ein Temperierelement zugeordnet ist.

### Stand der Technik

In vielen industriellen Bereichen werden Gegenstände hergestellt, die im Anschluss an die Herstellung gekühlt oder erwärmt werden müssen. Für viele Artikel, zum Beispiel in Fettmassenhülsen eingelegte Biskuits, ist trockene Luft mit einem Taupunkt von nicht höher als zum Beispiel 10°C erforderlich. Bei feuchter Luft werden die Biskuits zu weich.

Um eine effiziente Kühlung zu erreichen, wird der Unterschied der Temperatur der Kühlluft zur Ausformtemperatur des Kühlgutes möglichst gross gehalten. Das Kühlgut, zum Beispiel Fettmassen, kühlt aber wegen der schlechten Wärmeleitung und der grösseren Masse viel langsamer ab, als die entsprechende Giessform. Da sich in der Kühlluft in der Regel eine hohe Luftfeuchtigkeit befindet, kann es an der Form zu Kondenswasserbildung kommen, was wiederum zu Wasserflecken auf dem Produkt führt.

Aus der WO 99/04643 ist beispielsweise eine Vorrichtung der o.g. Art bekannt, bei der in den Hohlkörper bzw. in dessen Innenraum von unten her Luft eingeführt wird, die aus Luftöffnungen ausströmt und nachfolgend die Formen mit Kühlluft beaufschlagt. Durch diese Anordnung wird die Form, da sie auf einem Plattenbad liegt, nur von oben her gekühlt und die Kondenswasserbildung nicht berücksichtigt.

Die DE-2 544 923 zeigt eine Kühlvorrichtung für Lebensmittel, welche einen Spiralförderer aufweist, der quer von entfeuchteter Kühlluft durchströmt wird.

### Aufgabe

Der vorliegenden Erfindung liegt die Aufgabe zugrunde, eine Vorrichtung der oben genannten Art zu entwickeln, mit der auf einfache Art und Weise ein möglichst rasches Temperieren der Gegenstände erreicht werden kann, wobei das Temperieren möglichst von allen Seiten erfolgen soll und die Kondenswasserbildung verhindert wird.

### Zur Lösung der Aufgabe

Zur Lösung dieser Aufgabe führt, dass unter dem Temperierelement ein Flüssigkeitsfänger angeordnet ist in welchem die Kühlluft entfeuchtet wird, bevor sie über das Kühlgert geleistet wird.

Dieser Flüssigkeitsfänger dient dazu, die von der Kühlluft mitgeführten, im Temperierelement kondensierten, kleineren Flüssigkeitstropfen zu sammeln, zu grösseren Flüssigkeitstropfen zu binden, die dann in Folge ihrer Schwere nicht mehr von der Kühlluft mitgeführt werden können. Im Gegensatz zu bekannten Lösungen wird bei der vorliegenden Erfindung der Kühlluftstrom im Bereich der Temperierelemente von oben nach unten geführt, so dass die auf die Kondensattropfen einwirkenden Schwerkräfte und Schleppkräfte zur strömenden Luft gleichgerichtet sind. Dadurch werden selbst sehr kleine Wassertröpfchen mitgeführt und abgeschieden.

Beispielsweise kann hierfür im Flüssigkeitsfänger bzw. Wasserabscheider eine Prallplatte oder Prallmatte vorgesehen werden, in der die Flüssigkeitströpfchen versickern, so dass sie nur noch in geringem Ausmass der durchströmenden Kühlluft ausgesetzt sind. Eine derartige Prallmatte kann beispielsweise aus Spänen oder Fasern zum Beispiel aus Chromstahl oder Kunststoff bestehen und zwischen zwei Lochblechen angeordnet sein. Die schweren Flüssigkeitstropfen werden dann von einer Auffangwanne unterhalb des Flüssigkeitsfängers aufgesammelt.

Von grösster Bedeutung ist, dass die Form möglichst offen von allen Seiten von der Kühlluft angeströmt werden kann, während sie durch die Kühlvorrichtung transportiert wird. Damit dies der Fall ist, wird eine entsprechende Führung, vorzugsweise in Form einer Rippenkette, aus einzelnen Trägerschwingen gebildet, von denen Querrippen bzw. Abstandshalter aufragen, so dass die Formen nicht direkt auf den Trägerschwingen aufliegen, sondern von diesen abgehoben sind. Die Kühlluft unter den Formen wird derart verwirbelt, dass auch der Boden der Form laufend von Kühlluft angeströmt wird. Hierdurch kommt es zu einer Vergleichmässigung und Intensivierung der Kühlung, was ein erheblicher Vorteil ist. Durch diese Anordnung wird die Form sowohl von oben wie auch von unten von der Kühlluft angeströmt.

### Figurenbeschreibung

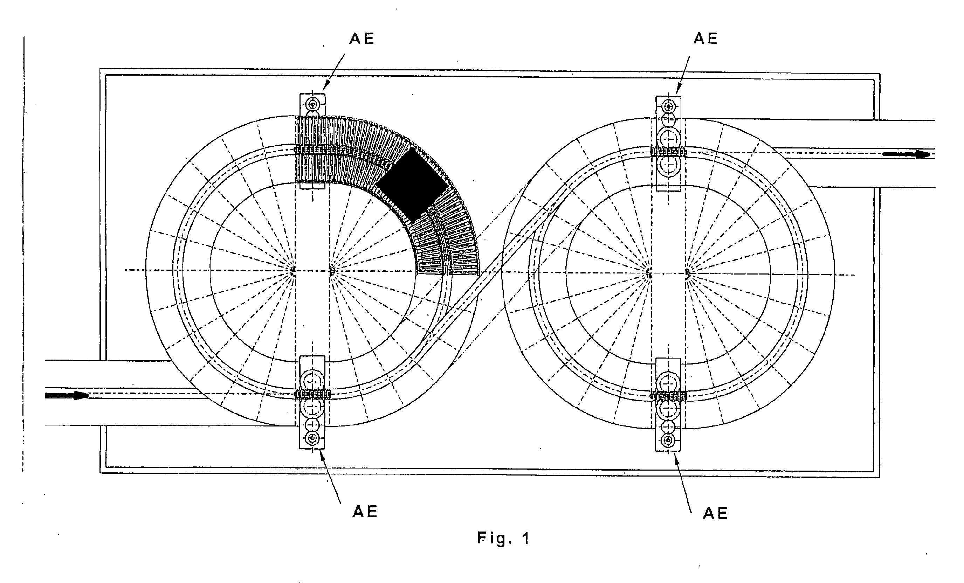

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: eine teilweise schematisch dargestellte Draufsicht auf eine erfindungsgemässe Vorrichtung zum Temperieren von Gegenständen;
- Fig. 2: einen schematisch dargestellten Längsschnitt durch die Vorrichtung gemäss Fig. 1 entlang Linie II-II;
- Fig. 3: eine Draufsicht auf einen Teil einer erfindungsgemässen Führung;
- Fig. 4A: einen Querschnitt durch die Führung im Bereich eines Antriebs mit aufgelegter Form;
- Fig. 4B: eine Draufsicht auf den Antrieb ohne aufgelegte Form;
- Fig. 5: eine Seitenansicht der erfindungsgemässen Führung im Bereich einer Umlenkung; und
- Fig. 6: eine Seitenansicht eines Teils der Führung im Bereich einer im Gegensatz zu Fig. 5 entgegengesetzten Umlenkung.

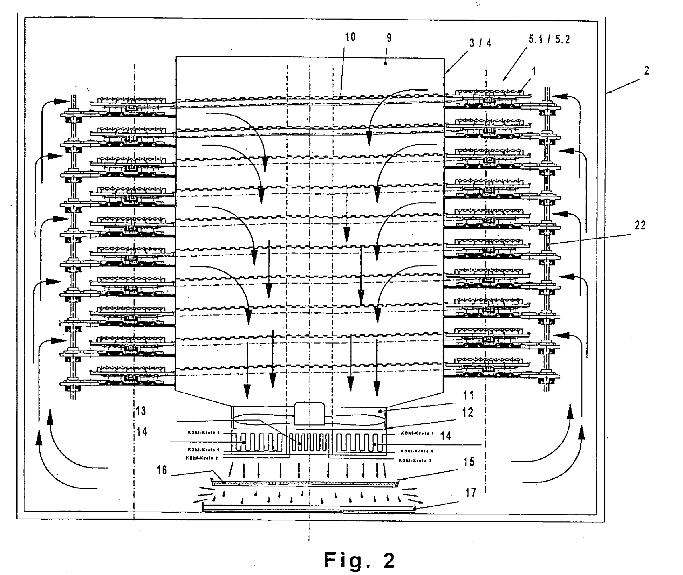

Eine erfindungsgemässe Vorrichtung zum Temperieren von Gegenständen, die sich in einer Form 1, Palette oder dgl. befinden, weist in einem Maschinengehäuse 2 zwei Hohlkörper 3 und 4 auf. Jeder Hohlkörper 3 und 4 wird von einer Führung 5 zum Führen der Formen 1 umfangen, wobei die Formen 1 über einen Einlauf 6 in die Führung 5.1 des ersten Höhlkörpers 3 gelangen. Die Führungen 5.1 und 5.2 umkreisen ihre jeweiligen Hohlkörper 3 und 4 wendelförmig, wie dies in Fig. 2 erkennbar ist.

Von der Führung 5.1 führt einen strichpunktiert angedeutete Geradstrecke 7 im oberen Bereich des Hohlkörpers 3 zur Führung 5.2 des Hohlkörpers 4, wobei die Führung 5.2 eine nach unten gerichtete Wendel aufweist. Die Führung 5.2 mündet dann in einen Auslauf 8 aus.

Der Hohlkörper 3/4 kann gemäss Fig. 2 nach oben hin von einem Deckel verschlossen oder aber auch offen sein. In seinen Mantel 9 sind eine Vielzahl von Öffnungen 10 eingeformt, die ebenfalls wendelförmig nach oben oder nach unten ausgerichtet sind. Bevorzugt folgen die Öffnungen 10 den Formen 1, die sich auf der Führung 5.1/5.2 befindet.

Im unteren Bereich sitzt in dem Hohlkörper 3/4 ein Ventilator 11, welcher Luft aus dem Innenraum des Hohlkörpers 3/4 ansaugt. Diesem Ventilator 11 ist ein Temperierelement 12 nachgeschaltet, wobei das Temperierelement 12 als Wärmetauscher ausgebildet ist und eine innere Temperierzone 13 sowie eine äussere Temperierzone 14 aufweist, die jeweils von einem Teil des Kühlkreislaufs durchströmt werden.

Unter dem Temperierelement 12 befindet sich ein Flüssigkeitsfänger 15, in dem eine Prallmatte 16 vorgesehen ist.

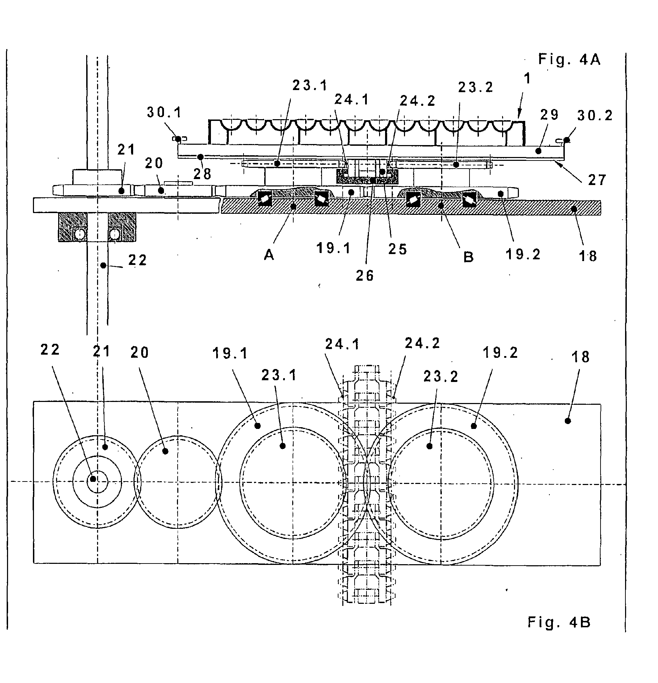

Unterhalb des Flüssigkeitsfängers 15 ist eine Auffangwanne 17 für Flüssigkeit angeordnet. Die Führung 5.1/5.2 weist gemäss Fig. 4 eine Wendelbahn 18 auf, welche die Hohlkörper 3 und 4 umläuft. Auf der Wendelbahn 18 sind zwei Treibräder 19.1 und 19.2 über Lager 20 abgestützt, wobei die Treibräder 19.1 und 19.2 miteinander in Eingriff stehen.

Das Treibrad 19.1 ist über ein Zwischenrad 20 mit einem Antriebsrad 21 verbunden. Das Antriebsrad 21 sitzt auf einer Antriebswelle 22 auf, wobei wie in Fig. 2 erkennbar die Antriebswelle 22 eine Mehrzahl von Antriebsräder 21 in den unterschiedlichen Stockwerken der Führung 5.1 bzw. 5.2 antreibt.

Wie in Fig. 4A und Fig. 4B gezeigt, weisen die Treibräder 19.1 und 19.2 jeweils eine Achse A bzw. B auf, um welche sie sich drehen. Auf jeder Achse A bzw. B sitzt auch ein Zahnrad 23.1 bzw. 23.2 auf, welche mit einer Zahnung 24.1 und 24.2 an einem Gleitstück 25 zusammenwirken. Die Zahnungen 24.1 und 24.2 sind auf ihre Zahnräder 23.1 und 23.2 in einer Krümmung so abgestimmt, dass ein evolventenartiger Eingriff zwischen Zahnung 24.1 bzw. 24.2 und Zahnrad 23.1 und 23.2 erfolgt.

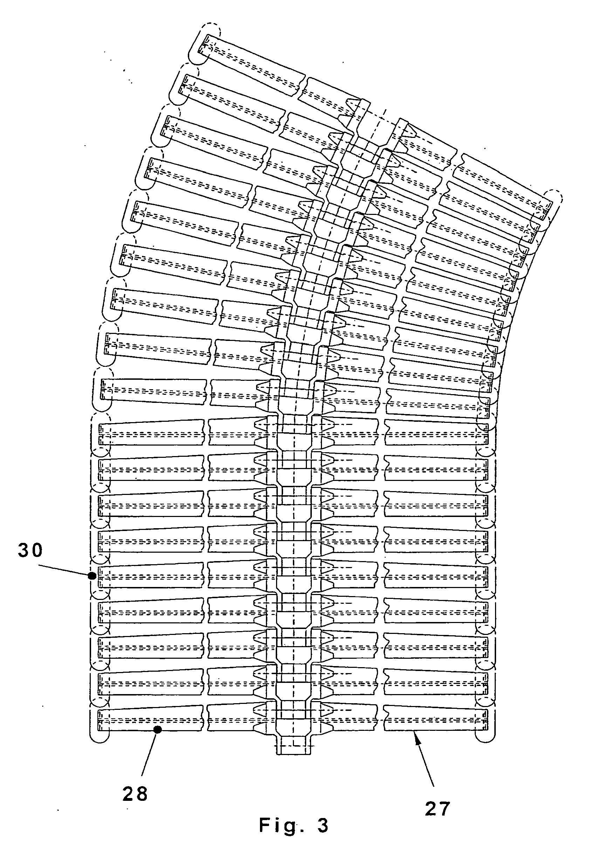

Das Gleitstück 25 gleitet in einer Schiene 26, welcher oberhalb der Wendelbahn 18 angeordnet ist, dieser jedoch folgt. Dabei ist das Gleitstück 25 Teil einer Trägerschwinge 27, die in Fig. 3 besser erkennbar ist. Eine Vielzahl von Trägerschwingen 27 sind gelenkig miteinander verbunden und bilden so eine Transportbahn für die Form 1. Dabei sitzt jedoch die Form nicht direkt auf einer Schwingenfläche 28 auf, sondern auf einer Querrippe 29, die von der Schwingenfläche 28 aufragt.

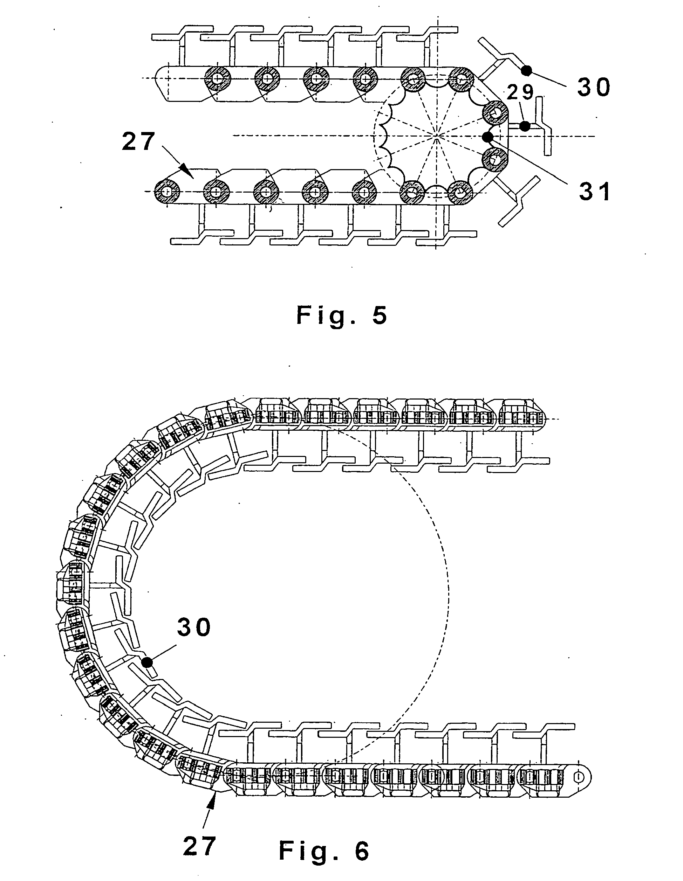

Auf der Querrippe 29 sitzen seitlich jeweils Seitenbegrenzer 30.1 bzw. 30.2 auf, welche wie in Fig. 5 erkennbar, die Form eines flachen liegenden Z aufweisen. Hierdurch wird gewährleistet, dass die Seitenbegrenzer 30 bei linearer Führung sich überlappen und somit eine geschlossene seitliche Begrenzung für die Form 1 bilden. Bei einer Umlenkung um eine Umlenkrolle 31 gemäss Fig. 5 können die Seitenbegrenzer 30 auseinander klaffen, überlappen sich aber dann wieder bei Geradeführung.

Bei einer anderen Umlenkung gemäss Fig. 6 ist zwischen den Seitenbegrenzern 30 noch genügend Freiraum, so dass sie auch näher zusammengebracht werden können.

Die Funktionsweise der vorliegenden Erfindung ist folgende:

Der Ventilator 11 saugt die Luft, wie durch die Pfeile angedeutet, aus dem Innenraum des Hohlkörpers 3/4 und presst die Luft durch das Temperierelement 12. Insbesondere, wenn der Hohlkörper 3/4 nach oben hin geschlossen ist, entseht im Hohlkörper ein Unterdruck und im gesamten Maschinengehäuse 2 ein entsprechender Überdruck. In Folge des Unterdrucks in dem Hohlkörper 3/4 wird Luft durch die Öffnungen 10 angesaugt, so dass eine erhebliche, später noch zu beschreibende Luftzirkulation in den einzelnen Etagen der Führung 5.1/5.2 entsteht.

Das Temperierelement besitzt, wie oben erwähnt, die innere Temperierzone 13 und die äussere Temperierzone 14. Die innere Temperierzone 13 wird mit einem Kühlmittel beschickt, welches eine möglichst tiefe Temperatur, aber nicht unter 0°C aufweist. Die Kühltemperatur der äusseren Temperierzone 14 ist höher. Dies bedeutet, dass der Wasseranteil der Kühlluft insbesondere an der inneren Temperierzone 13 kondensiert. Der für die Kühlluft verantwortliche Teil der Temperierzone arbeitet auf einem höheren Niveau. Durch die Vermischung der jeweils durch die Temperierzone 13 und durch die Temperierzone 14 strömenden Kühlluft wird ein Taupunkt unter den üblichen Wert abgesenkt.

Beim Anfahren des Temperierelementes bildet sich noch Kondenswasser an beiden Kühlkreisen. Nach einer bestimmten Zeit bildet sich jedoch nur noch Kondenswasser am inneren Kreislauf, wobei nun der Ventilator 11 seine zweite Funktion bestens erfüllen kann. Das Kondenswasser wird nämlich in Form kleiner Wassertropfen vom Ventilator mit grosser Geschwindigkeit nach unten geblasen.

Wäre nun unterhalb des Temperierelementes 12 lediglich eine Auffangwanne vorhanden, so würde zwar ein Teil des Kondenswassers in dieser Auffangwanne verbleiben, jedoch in Folge der starken Luftströmung wieder in den Umlauf gebracht. Das bedeutet, dass ein möglicher tiefer Taupunkt nicht erreicht werden kann.

Deshalb ist erfindungsgemäss zwischen der Auffangwanne 17 und dem Temperierelement 12 der Flüssigkeitsfänger 15 mit seiner Prallmatte 16 angeordnet. Diese Prallmatte sammelt die kleinen Tröpfchen des Kondenswassers, wobei die Tröpfchen durch die Prallmatte hindurch sickern. Der grösste Teil der Luft, die aus dem Temperierelement 12 austritt, fliesst seitlich an dem Flüssigkeitsfänger 15 vorbei und nimmt dabei keine Flüssigkeit mehr mit, da diese in der Prallmatte versickert. Nur ein geringerer Teil der Luft durchdringt die Prallmatte, wird hier aber erheblich abgebremst, so dass dieser Luftstrom nicht mehr die Kraft hat, die sich in der Prallmatte sammelnden, schweren Tröpfchen aufzunehmen und mitzuführen. Diese schweren Tropfen tropfen nach unten in die Auffangwanne 17 ab. Das heisst, mit dem erfindungsgemässen Konzept wird erreicht, dass die Kühlluft auf den gewünschten Taupunkt abtrocknet.

Die abgetrocknete Luft wird nun seitlich wieder an den Wänden des Maschinengehäuses 2 entlang der Führung 5.1/5.2 nach oben geführt und tritt dort von außen in die einzelnen Etagen der Führungen 5.1/5.2 ein. Da die Formen jedoch von den Schwingenflächen 28 abgehoben sind und auf den Querrippen 29 aufsitzen, kann die Kühlluft den Boden der Formen beaufschlagen. Dieser Boden weist normalerweise eine Vielzahl von Hohlräumen auf, in denen es zu einer erheblichen Verwirbelung der Kühlluft kommt, da sich die Kühlluft zudem vor den Öffnungen 10 des Mantels 9 staut. Diese Verwirbelungen sind durch die entsprechenden Pfeile in Fig. 4A angedeutet. Das heisst, durch diese Anordnung strömt Kühlluft die Form von oben, von unten und von beiden Seiten an, was zu einer perfekten Wärmeabgabe führt. Die Kühlung der Gegenstände wird zudem vergleichmässigt. Dies hat sehr positive Wirkung auf die Qualität der Gegenstände.

### Bezugszeichenliste

- 1: Form
- 2: Maschinengehäuse
- 3: Hohlkörper
- 4: Hohlkörper
- 5: Führung
- 6: Einlauf
- 7: Geradstrecke
- 8: Auslauf
- 9: Mantel
- 10: Öffnungen
- 11: Ventilator
- 12: Temperierelement
- 13: innere Temperierzone
- 14: äussere Temperierzone
- 15: Flüssigkeitsfänger
- 16: Prallmatte
- 17: Auffangwanne
- 18: Wendelbahn
- 19: Treibrad
- 20: Zwischenrad
- 21: Antriebsrad
- 22: Antriebswelle
- 23: Zahnrad
- 24: Zahnung
- 25: Gleitstück
- 26: Schiene
- 27: Trägerschwinge
- 28: Schwingenfläche
- 29: Querrippe
- 30: Seitenbegrenzer
- 31: Umlenkrolle

- A: Achse von 19.1
- B: Achse von 19.2

## Patentansprüche

1. Vorrichtung zum Temperieren von Gegenständen, insbesondere zum Kühlen von Verzehrgütern in der Confiserie, mit einem in einem Maschinengehäuse (2) angeordneten Hohlkörper (3, 4) mit Öffnungen (10) in seinem Mantel (9), welcher aussen von einer Führung (5.1, 5.2) für die Gegenstände umfangen ist, wobei dem Hohlkörper (3, 4) zumindest ein Ventilator (11) und diesem zumindest ein Temperierelement (12) zugeordnet ist, **dadurch gekennzeichnet, dass** unter dem Temperierelement (12) ein Flüssigkeitsfänger (15) angeordnet ist.

2. Vorrichtung nach Anspruch 2, **dadurch gekennzeichnet, dass** der Flüssigkeitsfänger (15) eine Prallplatte oder Prallmatte (16) für Flüssigkeitströpfchen aufweist.

3. Vorrichtung nach Anspruch 2 oder 3, **dadurch gekennzeichnet, dass** der Flüssigkeitsfänger (15) zwei Lochbleche mit dazwischen angeordneten Chromstahlspänen oder Kunststofffasern aufweist.

4. Vorrichtung nach wenigstens einem der Ansprüche 1 bis 4, **dadurch gekennzeichnet, dass** unter dem Temperierelement (12) bzw. dem Flüssigkeitsfänger eine Auffangwanne (17) angeordnet ist.

5. Verfahren zum Temperieren von Gegenständen, insbesondere zum Kühlen von Verzehrgütern in der Confiserie, mit einem in einem Maschinengehäuse (2) angeordneten Hohlkörper (3, 4) mit Öffnungen (10) in seinem Mantel (9), welcher aussen von einer Führung (5.1, 5.2) für die Gegenstände umfangen ist, wobei dem Hohlkörper (3, 4) zumindest ein Ventilator (11) und diesem zumindest ein Temperierelement (12) zugeordnet ist, wobei der Ventilator (11) Luft aus dem Hohlkörper (3, 4) ansaugt, diese durch das Temperierelement (12) durchdrückt, die Luft anschliessend entfeuchtet wird und danach die entfeuchtete Luft bzw. abgetrocknete Luft an den Wänden des Maschinengehäuses (2) entlang geführt und von aussen der Führung (5.1, 5.2) zugeführt wird.

6. Verfahren nach Anspruch 10, **dadurch gekennzeichnet, dass** die Luft in der Führung (5.1, 5.2) verwirbelt wird.

7. Verfahren nach Anspruch 10 oder 11, **dadurch gekennzeichnet, dass** die Luft im Temperierelement (12) in Bereichen unterschiedlich temperiert wird.

8. Verfahren nach einem der Ansprüche 10 bis 12, **dadurch gekennzeichnet, dass** Kondenswasser von dem Temperierelement (12) nach unten abgeblasen und auf einen Flüssigkeitsfänger (15) geschleudert wird.

## Claims

1. A device for tempering objects, in particular for cooling consumables in the area of confectionary, having a machine casing (2) that incorporates a hollow item (3, 4) with openings (10) in its jacket (9), which is enveloped outside by a guide (5.1, 5.2) for the objects, wherein the hollow item (3, 4) at least one fan (11) allocated to it, and the latter has at least one tempering element (12) allocated to it, **characterized in that** a liquid catching means (15) is situated under the tempering element (12).

2. The device according to claim 2, **characterized in that** the liquid catching means (15) exhibits an impact plate or impact matt (16) for liquid droplets.

3. The device according to claim 2 or 3, **characterized in that** the liquid catching means (15) exhibits two perforated sheets interspersed with chromium steel chips or plastic fibers.

4. The device according to at least one of claims 1 to 4, **characterized in that** a collecting tub (17) is situated under the tempering element (12) or the liquid catching means (15).

5. A method for tempering objects, in particular for cooling consumables in the area of confectionary, having a machine casing (2) that incorporates a hollow item (3, 4) with openings (10) in its jacket (9), which is enveloped outside by a guide (5.1, 5.2) for the objects, wherein the hollow item (3, 4) at least one fan (11) allocated to it, and the latter has at least one tempering element (12) allocated to it, wherein the fan (11) aspirates air from the hollow item (3, 4), forces it through the tempering element, whereupon the air is dehumidified, after which the dehumidified air or dried air is routed along the walls of the machine casing (2) and fed to the guide (5.1, 5.2) from outside.

6. The method according to claim 10, **characterized in that** the air is swirled in the guide (5.1, 5.2).

7. The method according to claim 10 or 11, **characterized in that** the air is varyingly tempered by region in the tempering element (120.

8. The method according to one of claims 10 to 12, **characterized in that** condensed water from the tempering element (12) is downwardly purged and centrifuged in a liquid catching means (15).

## Revendications

1. Dispositif permettant de tempérer des objets, notamment de refroidir des produits de consommation de la confiserie, comportant un corps creux (3, 4) disposé dans un bâti de machine (2) et pourvu d'ouvertures (10) dans son enveloppe (9) et qui est entouré sur l'extérieur d'un guide (5.1, 5.2) pour les objets, étant associé au corps creux (3, 4) au moins un ventilateur (11) et à ce dernier au moins un élément températeur (12), **caractérisé en ce qu'**un collecteur de liquide (15) est disposé sous l'élément températeur (12).

2. Dispositif selon la revendication 2, **caractérisé en ce que** le collecteur de liquide (15) comporte une plaque de rebond ou un tapis de rebond (16) pour les gouttelettes de liquide.

3. Dispositif selon la revendication 2 ou 3, **caractérisé en ce que** le collecteur de liquide (15) présente deux tôles perforées avec des copeaux d'acier chromé ou des fibres de matière plastique disposées entre elles.

4. Dispositif selon au moins une des revendication 1 à 4, **caractérisé en ce que**, sous l'élément températeur (12) ou le collecteur de liquide, un bac récupérateur (17) est disposé.

5. Procédé permettant de tempérer des objets, notamment de refroidir des produits de consommation de la confiserie, comportant un corps creux (3, 4) disposé dans un bâti de machine (2) et pourvu d'ouvertures (10) dans son enveloppe (9) et qui est entouré sur l'extérieur d'un guide (5.1, 5.2) pour les objets, étant associé au corps creux (3, 4) au moins un ventilateur (11) et à ce dernier au moins un élément températeur (12), le ventilateur (11) aspirant de l'air dans le corps creux (3, 4), le comprimant par l'élément températeur (12), l'air étant ensuite déshumidifié puis l'air déshumidifié ou asséché étant guidé le long des parois du bâti de machine (2) et étant acheminé de l'extérieur vers le guide (5.1, 5.2).

6. Procédé selon la revendication 10, **caractérisé en ce que** l'air tourbillonne dans le guide (5.1, 5.2).

7. Procédé selon la revendication 10 ou 11, **caractérisé en ce que** l'air est tempéré différemment dans l'élément températeur (12) à certains endroits.

8. Procédé selon une des revendications 10 à 12, **caractérisé en ce que** l'eau condensée par l'élément températeur (12) est soufflée vers le bas et essorée sur un récupérateur de liquide (15).
